# EUROPEAN PATENT APPLICATION

(11) **EP 3 624 472 A1**
(43) Date of publication of application: **18.03.2020**
(21) Application number: 17911671.0
(22) Date of filing: 31.05.2017
(51) Int. Cl.: H04W 4/40, H04L 29/06, H04L 9/32, H04W 12/06, H04W 12/12, H04W 12/10

(54) **INFORMATION PROCESSING METHOD, DEVICE AND SYSTEM**

(71) Applicant: Huawei Technologies Co., Ltd., Longgang District Shenzhen, Guangdong 518129 (CN)
(72) Inventor: XIAO, Feilong, Shenzhen Guangdong 518129 (CN)
(74) Representative: Isarpatent
(86) International application number: PCT/CN2017/086673
(87) International publication number: WO 2018/218535

(57) **Abstract**

An information processing method, an apparatus, and a system are provided, and relate to the field of communications technologies, to resolve a traffic safety problem caused by malicious information in a V2X communication scenario. The method includes: obtaining, by a first device, V2X information of user equipment; performing, by the first device, verification on the V2X information; if the verification on the V2X information fails, sending, by the first device, status information to a second device, where the status information is used to indicate a result of the verification on the V2X information performed by the first device; and when the second device receives the status information sent by the first device, monitoring, by the second device, the user equipment based on the status information.

## Description

### TECHNICAL FIELD

Embodiments of this application relate to the field of communications technologies, and in particular, to an information processing method, an apparatus, and a system.

### BACKGROUND

Vehicle-to-everything (Vehicle-to-Everything, V2X) information exchange is vehicle-to-vehicle (Vehicle-to-vehicle, V2V) communication, vehicle-to-infrastructure (Vehicle -to- Infrastructure, V2I) communication, and vehicle-to-pedestrian (Vehicle -to-Pedestrian, V2P) communication. V2X communication can improve road safety, improve traffic efficiency, and provide users with numerous streaming media services.

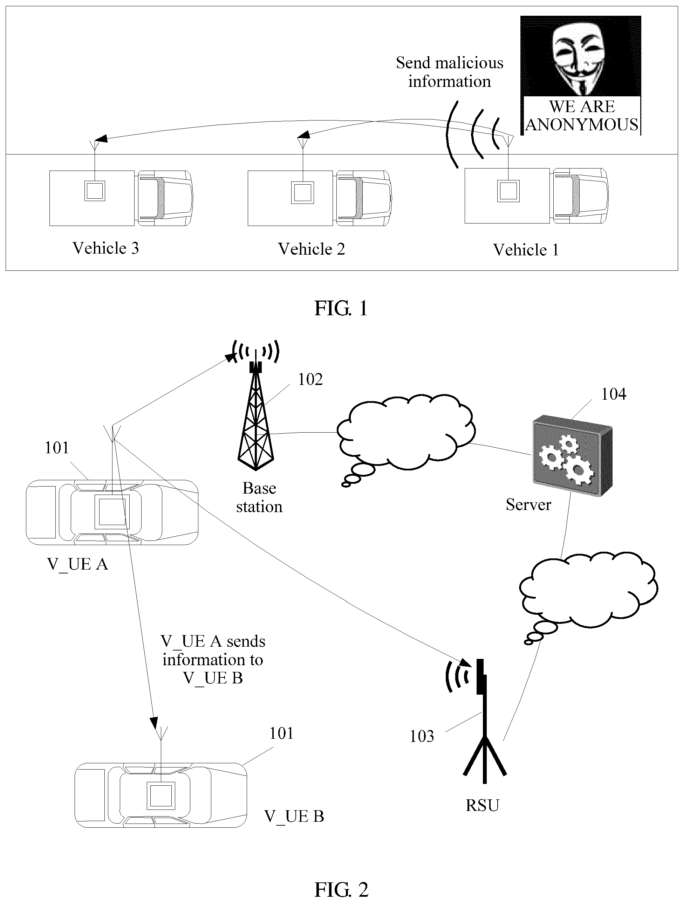

At present, in a V2X-based communication scenario, usually, some malicious users or hacked zombie users send malicious information. For example, as shown in FIG. 1, a vehicle (vehicle 1) is hacked and continuously sends dangerous information such as emergency braking or out-of-control of the vehicle to the outside, and consequently, surrounding vehicles or pedestrians give way or take other measures due to the malicious information, affecting a normal traffic order, and even causing traffic accidents, out-of-control of traffic, or traffic paralysis. However, in the prior art, no specific solution is provided to avoid problems in traffic safety caused by malicious information in theV2X communication scenario.

### SUMMARY

Embodiments of this application provide an information processing method, an apparatus, and a system, to resolve a traffic safety problem caused by malicious information in a V2X communication scenario.

To achieve the foregoing objective, the following technical solutions are used in the embodiments of this application:

According to a first aspect, an information processing method is provided, where the method includes: obtaining, by a first device, V2X information of user equipment; and performing, by the first device, verification on the V2X information, and if the verification on the V2X information fails, sending, by the first device, status information to a second device, where the status information is used to indicate a result of the verification on the V2X information performed by the first device. In the foregoing technical solutions, the first device obtains the V2X information of the user equipment, performs verification on the V2X information, and sends the status information to the second device if the verification on the V2X information fails, so that the second device monitors the user equipment based on the status information, to prevent a malicious user, a hacked zombie user, or the like from sending the malicious information by using the user equipment, and resolve a traffic safety problem caused by sending malicious V2X information, thereby ensuring a normal traffic order and improving traffic safety.

With reference to the first aspect, in a first possible implementation of the first aspect, the V2X information includes at least one of the following information: an identifier of user equipment, a user certificate, a user signature, and a message type. In the foregoing possible implementation, a plurality of types of possible V2X information is provided, so that the first device can perform verification based on information included in the V2X information, to determine security of the V2X information.

With reference to the first possible implementation of the first aspect, in a second possible implementation of the first aspect, the performing, by the first device, verification on the V2X information includes: if the V2X information includes the user certificate, performing, by the first device, verification on the user certificate, and if the user certificate is invalid, determining that the verification on the V2X information fails; and/or if the V2X information includes the user signature, performing, by the first device, verification on the user signature, and if the user signature is incorrect, determining that the verification on the V2X information fails; and/or if the V2X information includes the message type, performing, by the first device, verification on the message type, and if the message type belongs to a preset message type, determining that the verification on the V2X information fails. In the foregoing possible implementation, the verification on the user certificate, and/or the user signature, and/or the message type included in the V2X information is performed, to determine the security of the V2X information of the user equipment.

With reference to the second possible implementation of the first aspect, in a third possible implementation of the first aspect, the status information further includes a reporting type, where the reporting type belongs to a preset reporting type, and the reporting type includes a certificate error, a signature error, and emergency and special information. Before the sending, by the first device, status information to a second device, the method further includes: if the user certificate is invalid, determining, by the first device, the reporting type in the status information as the certificate error; if the user signature is incorrect, determining, by the first device, the reporting type in the status information as the signature error; or if the message type is the preset message type, determining, by the first device, the reporting type in the status information as the emergency and special information. In the foregoing possible implementation, the reporting type of the status information is determined by performing verification on the user certificate, and/or the user signature, and/or the message type included in the V2X information, so that the second device performs monitoring based on the corresponding reporting type, thereby improving direction of the monitoring, ensuring a normal traffic order, and improving traffic safety.

With reference to any one of the possible implementations of the first aspect to the third possible implementation of the first aspect, in a fourth possible implementation of the first aspect, the status information further includes at least one of the following information: the message type, position information of the user equipment, and detection time. In the foregoing possible implementations, a plurality of types of possible status information is provided, so that the second device can perform monitoring based on different information included in the status information, thereby improving the direction of the monitoring, ensuring a normal traffic order, and improving traffic safety.

According to a second aspect, an information processing method is provided, where the method includes: receiving, by a second device, status information sent by a first device, where the status information is used to indicate a result of verification on V2X information of user equipment performed by the first device; and monitoring, by the second device, the user equipment based on the status information. In the foregoing technical solution, when the second device receives the status information sent by the first device, the second device may monitor the user equipment based on the status information, to prevent a malicious user, a hacked zombie user, or the like from sending malicious information by using the user equipment, and resolve a traffic safety problem caused by sending malicious V2X information, thereby ensuring a normal traffic order and improving traffic safety.

With reference to the second aspect, in a first possible implementation of the second aspect, the status information further includes at least one of the following information: an identifier of the user equipment, a reporting type, a message type, position information of the user equipment, and detection time, where the reporting type belongs to a preset reporting type, and the preset reporting type includes a certificate error, a signature error, and emergency and special information. In the foregoing possible implementation, a plurality of types of possible status information is provided, so that the second device can perform monitoring based on different information included in the status information, thereby ensuring a normal traffic order and improving traffic safety.

With reference to the first possible implementation of the second aspect, in a second possible implementation of the second aspect, if the status information includes the reporting type, after the receiving, by a second device, status information sent by a first device, the method further includes: if there is statistical information corresponding to the identifier of the user equipment, updating, by the second device based on the status information, the statistical information corresponding to the identifier of the user equipment; or if there is no statistical information corresponding to the identifier of the user equipment, adding, by the second device based on the status information, the statistical information corresponding to the identifier of the user equipment. In the foregoing possible implementation, the second device may perform statistical analysis on the received status information, to determine the statistical information corresponding to the identifier of the user equipment, thereby improving the rationality and accuracy of monitoring the user equipment.

With reference to the second possible implementation of the second aspect, in a third possible implementation of the second aspect, the monitoring, by the second device, the user equipment based on the status information includes: if the reporting type is the certificate error or the signature error, sending, by the second device, alarm information to the user equipment; or if the reporting type is the emergency and special information, determining, by the second device, whether the statistical information corresponding to the identifier of the user equipment meets a preset alarm condition, and sending alarm information to the user equipment if the preset alarm condition is met. In the foregoing implementation, the second device may differently monitor the user equipment based on the reporting type included in the status information, so as to improve the rationality and accuracy of monitoring the user equipment, thereby ensuring the normal traffic order and improving the traffic safety.

With reference to the third possible implementation of the second aspect, in a fourth possible implementation of the second aspect, the preset alarm condition may be one of the following: a quantity of times of reporting the user equipment within specified duration meets a first preset threshold, or a quantity of times of reporting the user equipment in a specified area meets a second preset threshold. In the foregoing implementation, a plurality of types of possible preset alarm conditions are provided, so that when the preset alarm condition is met, the second device sends the alarm information to the user equipment, preventing the user equipment from sending the malicious information, thereby ensuring the normal traffic order and improving the traffic safety.

According to a third aspect, a device is provided, and the device is a first device and includes: a receiving unit, configured to obtain V2X information of user equipment; a processing unit, configured to perform verification on the V2X information; and a sending unit, configured to: if the verification on the V2X information fails, send status information to a second device, where the status information is used to indicate a result of the verification on the V2X information performed by the first device.

With reference to the third aspect, in a first possible implementation of the third aspect, the V2X information includes at least one of the following information: an identifier of user equipment, a user certificate, a user signature, and a message type.

With reference to the first possible implementation of the third aspect, in a second possible implementation of the third aspect, the processing unit is specifically configured to: if the V2X information includes the user certificate, perform verification on the user certificate, and if the user certificate is invalid, determine that the verification on the V2X information fails; and/or if the V2X information includes the user signature, perform verification on the user signature, and if the user signature is incorrect, determine that the verification on the V2X information fails; and/or if the V2X information includes the message type, perform verification on the message type, and if the message type belongs to a preset message type, determine that the verification on the V2X information fails.

With reference to the second possible implementation of the third aspect, in a third possible implementation of the third aspect, the status information further includes a reporting type, the reporting type belongs to a preset reporting type, the preset reporting type includes a certificate error, a signature error, and emergency and special information, and the processing unit is further configured to: if the user certificate is invalid, determine the reporting type in the status information as the certificate error; if the user signature is incorrect, determine the reporting type in the status information as the signature error; or if the message type is the preset message type, determine the reporting type in the status information as the emergency and special information.

With reference to any one of the possible implementations of the third aspect to the third possible implementation of the third aspect, in a fourth possible implementation of the third aspect, the status information further includes at least one of the following information: the message type, position information of the user equipment, and detection time.

According to a fourth aspect, a device is provided, and the device is a second device and includes: a receiving unit, configured to receive status information sent by a first device, where the status information is used to indicate a result of verification on V2X information of user equipment performed by the first device; and a processing unit, configured to monitor the user equipment based on the status information.

With reference to the fourth aspect, in a first possible implementation of the fourth aspect, the status information further includes at least one of the following information: an identifier of the user equipment, a reporting type, a message type, position information of the user equipment, and detection time, where the reporting type belongs to a preset reporting type, and the preset reporting type includes a certificate error, a signature error, and emergency and special information.

With reference to the first possible implementation of the fourth aspect, in a second possible implementation of the fourth aspect, if the status information includes the reporting type, the processing unit is further configured to: if there is statistical information corresponding to the identifier of the user equipment, update, based on the status information, the statistical information corresponding to the identifier of the user equipment; or if there is no statistical information corresponding to the identifier of the user equipment, add, based on the status information, the statistical information corresponding to the identifier of the user equipment.

With reference to the second possible implementation of the fourth aspect, in a third possible implementation of the fourth aspect, the processing unit is specifically configured to: if the reporting type is the certificate error or the signature error, send alarm information to the user equipment; or if the reporting type is the emergency and special information, determine whether the statistical information corresponding to the identifier of the user equipment meets a preset alarm condition, and send alarm information to the user equipment if the preset alarm condition is met.

With reference to the third possible implementation of the fourth aspect, in a fourth possible implementation of the fourth aspect, the preset alarm condition may be one of the following: a quantity of times of reporting the user equipment within specified duration meets a first preset threshold, or a quantity of times of reporting the user equipment in a specified area meets a second preset threshold.

According to a fifth aspect, a device is provided, and the device is a first device and includes a processor and a memory. The memory stores code and data, and the processor runs the code in the memory, so that the device performs the information processing method according to any one of the first aspect to the fourth possible implementation of the first aspect.

According to a sixth aspect, a device is provided, and the device is a second device and includes a processor and a memory. The memory stores code and data, and the processor runs the code in the memory, so that the device performs the information processing method according to any one of the second aspect to a fourth possible implementation of the second aspect.

According to a seventh aspect, a system is provided, and the system includes user equipment, a first device, and a second device. The first device may be a base station and/or a roadside unit, and the first device is a device according to the third aspect, any one of possible implementations of the third aspect, or the fifth aspect; and/or the second device is a device according to the fourth aspect, any one of possible implementations of the fourth aspect, or the sixth aspect.

According to another aspect of this application, a computer readable storage medium is provided. The computer readable storage medium stores an instruction, and when the instruction runs on a computer, the computer is enabled to perform the information processing methods in the foregoing aspects.

According to still another aspect of this application, a computer program product including an instruction is provided. When the instruction runs on a computer, the computer is enabled to perform the information processing methods in the foregoing aspects.

It may be understood that any one of the apparatus, computer storage medium, or computer program product provided above for the information processing method is configured to perform the corresponding method provided above. Therefore, for beneficial effects that can be achieved by the apparatus, the computer storage medium, or the computer program product, refer to beneficial effects in the corresponding method provided above. Details are not described herein again.

### BRIEF DESCRIPTION OF DRAWINGS

FIG. 1 is a schematic diagram of sending malicious information in V2X communication scenario;
FIG. 2 is an architectural diagram of a communications system according to an embodiment of this application;
FIG. 3 is a schematic structural diagram of user equipment/a roadside unit according to an embodiment of this application;
FIG. 4 is a schematic structural diagram of a base station according to an embodiment of this application;
FIG. 5 is a schematic structural diagram of a server according to an embodiment of this application.
FIG. 6 is a flowchart of an information processing method according to an embodiment of this application;
FIG. 7 is a structural diagram of status information according to an embodiment of this application;
FIG. 8 is a flowchart of another information processing method according to an embodiment of this application;
FIG. 9 is a schematic structural diagram of a first device according to an embodiment of this application;
FIG. 10 is a schematic structural diagram of another first device according to an embodiment of this application;
FIG. 11 is a schematic structural diagram of a second device according to an embodiment of this application; and
FIG. 12 is a schematic structural diagram of another second device according to an embodiment of this application.

### DESCRIPTION OF EMBODIMENTS

Technical solutions described in this application may be applied to a global system for mobile communication (Global System for Mobile Communication, GSM), a code division multiple access (Code Division Multiple Access, CDMA) system, and a wideband code division multiple access (Wide-Band Code Division Multiple Access, WCDMA), a long term evolution (Long Term Evolution, LTE) system, a fifth generation 5G communications system, a future mobile communications system, and the like.

A system architecture applied in the embodiments of this application is shown in FIG. 2. The system architecture may include user equipment (User Equipment, UE) 101, a base station 102, a roadside unit (Road Side Unit, RSU) 103, and a server 104. The user equipment 101 in this application may include various handheld devices, in-vehicle devices, wearable devices, or computing devices having wireless communication functions, and user equipment in various forms, for example, a terminal (terminal), a terminal equipment (Terminal Equipment), and a vehicle user equipment (Vehicle User Equipment, V_UE). For ease of description, in this application, the foregoing devices are collectively referred to as user equipment or UE. The base station in this application is an apparatus that is deployed in a radio access network and that is configured to provide a wireless communication function for the UE. The base station may include a macro base station, a micro base station, a relay station, an access point, and the like in various forms. In systems that use different radio access technologies, a device with a base station function may have different names. For example, in an LTE network, the device is referred to as an evolved NodeB (evolved NodeB, eNB or eNodeB), and in a 3rd generation 3G network, the device is referred to as a NodeB (NodeB). For ease of description, in this application, all the foregoing apparatuses that provide a wireless communications function for the UE are referred to as a base station. The roadside unit 103 in this application is a device installed on a road side and configured to communicate with the user equipment 101 to implement functions such as identity recognition of the user equipment, electronic deduction, and fast dedicated lane establishing. For ease of description, in this application, the device with the above functions is collectively referred to as the roadside unit. The server 104 may include devices with various service functions. The devices may be categorized as a file server, a database server, and an application program server, and the like. For ease of description, in this application, computers or computer systems with the service function are collectively referred to as a server.

FIG. 2 is described by using an example in which the user equipment 101 is vehicle user equipment V_UE and includes V_UE A and V_UE B. The V_UE A may exchange information with the V_UE B. Specifically, the base station 102 may allocate transmission resources used during information exchange to the user equipment101, and communicate with the user equipment 101 and the server 104. The server 104 may collect information about vehicles, roads, and environment based on communication with the base station 102 and the roadside unit 103, to manage and control the user equipment 101. For example, the system architecture shown in FIG. 2 may be specifically an internet of vehicle (Internet of Vehicle, IOV) system, and the internet of vehicle is a dynamic mobile communications system in which a vehicle communicates with a public network through interactions of vehicle-to-vehicle, vehicle-to-road, vehicle-to-pedestrian, and vehicle-to-sensing device. In the internet of vehicle, information may be shared through interworking of vehicle-to-vehicle, vehicle-to-pedestrian, and vehicle-to-road, and information about vehicles, roads, and environment is collected. In addition, information collected from a plurality of sources is processed, calculated, shared, and securely published on an information network platform, vehicles are effectively guided and monitored according to different functional requirements, and professional multimedia and mobile internet application services are provided.

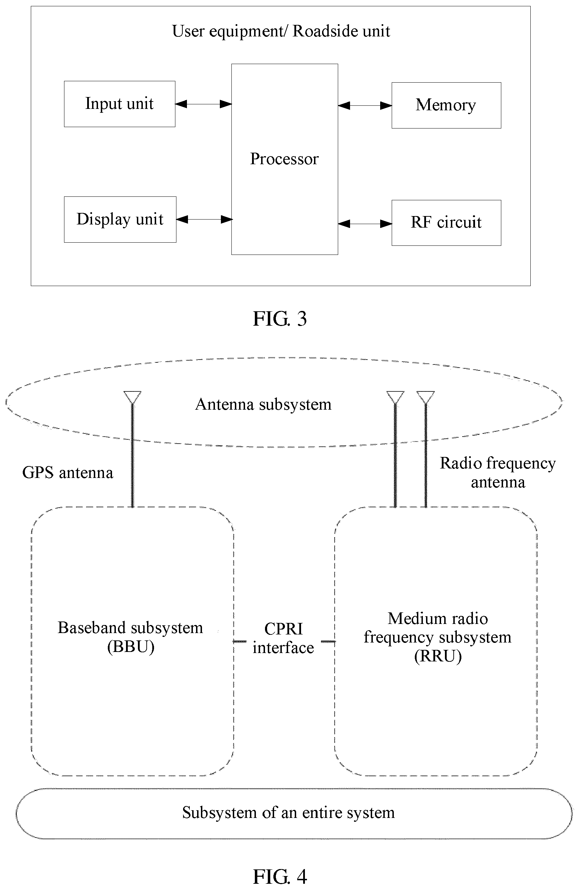

FIG. 3 is a schematic structural diagram of user equipment/a roadside unit according to an embodiment of this application. As shown in FIG. 3, the user equipment/roadside unit means that the device may be the user equipment or the roadside unit, and may specifically include components such as a memory, a processor, a radio frequency (Radio Frequency, RF) circuit, an input unit, and a display unit. The memory may be configured to store a software program and a module, and the processor executes various functional applications of the user equipment or the roadside unit and processes data by running the software program and the module that are stored in the memory. The processor is a control center of the device, connects all parts of the entire device by using various interfaces and lines, and executes various functions of the device and processes data by running or executing the software program and/or the module stored in the memory and by invoking data stored in the memory. The RF circuit may be configured to receive and send a signal. The RF circuit usually includes but is not limited to an antenna, at least one amplifier, a transceiver, a coupler, a low noise amplifier (Low Noise Amplifier, LNA), a duplexer, and the like. The input unit may be configured to receive data entered by a user. The display unit may be a display panel, configured to provide a display function. Although not shown, the device may further include a sensor module, an audio module, a Bluetooth module, and the like, and details are not described herein.

FIG. 4 is a schematic structural diagram of a base station according to an embodiment of this application. Referring to FIG. 4, the base station includes a baseband subsystem, a medium radio frequency subsystem, an antenna subsystem, and some support structures (for example, a subsystem of an entire system). The baseband subsystem is used to implement operation and maintenance of the entire base station, signaling processing, radio resource management, and a transmission interface to a packet core network, and implement an LTE physical layer, a media access control layer, L3 signaling, and a main control function of operation and maintenance. The medium radio frequency subsystem implements conversion between a baseband signal, an intermediate frequency signal, and a radio frequency signal, and implements demodulation of an LTE wireless received signal, modulation and power amplification of a to-be-sent signal. The antenna subsystem includes an antenna and a feeder connected to a radio frequency module of the base station, and an antenna and a feeder of a GRS receiving card, and is configured to receive and send a wireless air interface signal. The subsystem of the entire system) is a support part of the baseband subsystem and the medium radio frequency subsystem, and provides a structure, power supply, and environment monitoring function.

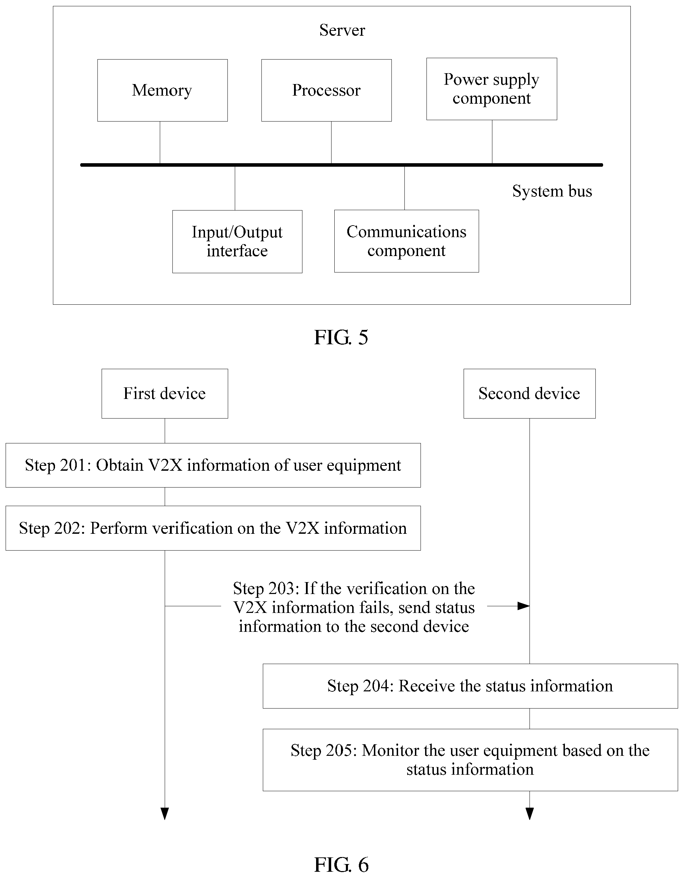

FIG. 5 is a schematic structural diagram of a server according to an embodiment of this application. Referring to FIG. 5, the server includes a memory, a processor, a system bus, a power supply component, an input/output interface, a communications component, and the like. The memory may be configured to store data, a software program, and a module, and mainly includes a program storage area and a data storage area. The program storage area may store an operating system, an application program required for at least one function, and the like. The data storage area may store data created during use of the server, and the like. The processor executes various functions of the server and processes data by running or executing the software program and/or the module stored in the memory and by invoking the data stored in the memory. The system bus includes an address bus, a data bus, and a control bus, and is configured to transmit data and an instruction. The power supply component is configured to supply power to each component of the server. The input/output interface is configured to provide an interface between the processor and a peripheral interface module. The communications component is configured to perform communication between the server and another device in a wired or wireless manner.

A person skilled in the art may understand that the user equipment/roadside unit, the base station, and the server shown in FIG. 3 to FIG. 5 are not limited by the structures of the user equipment/roadside unit, the base station, and the server. In actual application, the user equipment/roadside unit, the base station, and the server may include more or fewer components than those shown in the figure, or combine some components, or have different component arrangements.

FIG. 6 is a flowchart of an information processing method according to an embodiment of this application. The method is applied to a communications system shown in FIG. 2. Referring to FIG. 6, the method includes the following steps.

Step 201: A first device obtains V2X information of user equipment.

The first device may be a base station or a roadside unit, and the V2X information of the user equipment is information sent by the user equipment to the outside. The V2X information may be vehicle-to-vehicle (Vehicle -to- vehicle, V2V) information, vehicle-to-infrastructure (Vehicle -to- Infrastructure, V2I) information, or vehicle-to-pedestrian (Vehicle-to-Pedestrian, V2P) information. Specifically, when the user equipment sends the V2X information to the base station, the roadside unit, or other user equipment, the first device may obtain the V2X information of the user equipment.

Step 202: The first device performs verification on the V2X information.

When the first device obtains the V2X information of the user equipment, the first device may perform the verification on the V2X information to determine whether the V2X information is secure information. If the V2X information is verified, the V2X information is secure information, or if the verification on the V2X information fails, the V2X information may be insecure information. Specifically, when the first device determines that the verification on the V2X information fails, the V2X information may be insecure information. Therefore, the first device may determine status information of the user equipment based on a verification result. When the first device determines that the V2X information is verified, it indicates that the V2X information is secure information, so that the first device does not need to determine the status information of the user equipment. That is, when the first device determines that the V2X information is secure information, the first device does not need to perform any processing.

Further, the V2X information may include one or more of an identifier of the user equipment, a user certificate, a user signature, and a message type. The user certificate is a certificate used to indicate validity of a user identity of the user equipment. The user certificate may be issued by an authority, such as a certificate authority (Certificate Authority, CA) center. The user signature is a signature used to indicate the user identity of the user equipment, and the signature may be a digital signature. The message type is used to indicate a type of the V2X information. For example, a type of V2X information sent by a special vehicle such as an ambulance or a fire-fighting vehicle to instruct a surrounding vehicle to give way may be a special message, and a type of V2X information sent by an out-of-control vehicle or the like to notify a surrounding vehicle may be an emergency message.

Specifically, when the verification on the V2X information performed by the first device fails, the first device may further determine the status information of the user equipment. The status information is used to indicate the result of the verification on the V2X information performed by the first device. The status information includes the identifier of the user equipment. The identifier of the user equipment is used to uniquely identify the user equipment. For example, the identifier of the user equipment may be an identification code or a sequence code of the user equipment, or an identifier of a user that uses the user equipment. This is not limited in this embodiment of this application.

In addition, the status information may further include a reporting type, the reporting type belongs to a preset reporting type, and the preset reporting type includes a certificate error, a signature error, and emergency and special information. The certificate error is a reporting type used when the user certificate included in the V2X information is invalid when the first device performs the verification on the V2X information. The signature error is a reporting type used when the user signature included in the V2X information is incorrect when the first device performs the verification on the V2X information. The emergency and special information is a reporting type used when the message type of the V2X information belongs to the preset message type when the first device performs the verification on the V2X information. The preset message type may be preset. For example, the preset message type may include an emergency message and a special message.

Specifically, when the V2X information includes the user certificate, the first device may perform verification on the user certificate. If the user certificate is invalid, the first device may determine that the verification on the V2X message fails, so that the first device can determine that the reporting type in the status information of the user equipment is the certificate error. Alternatively, when the V2X information includes the user signature, the first device may perform verification on the user signature. If the user signature is incorrect, the first device may determine that the verification on the V2X message fails, so that the first device can determine that the reporting type in the status information of the user equipment is the signature error. Alternatively, when the V2X information includes the message type, the first device may perform verification on the message type. If the message type belongs to the preset message type, the first device may determine that the verification on the V2X message fails, so that the first device can determine that the reporting type in the status information of the user equipment is the emergency and special information.

Alternatively, when the V2X information includes any two or all of the user certificate, the user signature, and the message type, the first device may separately perform verification on each item included in the V2X information. If verification on one of the user certificate, the user signature, and the message type fails, it may be determined that the verification on the V2X information fails. Optionally, when the first device performs verification on each item, if verification on one item fails, the first device does not need to perform subsequent verification. Further, when the first device performs verification on each item included in the V2X information, the first device may separately perform verification according to a preset sequence. For example, the first device may separately perform verification on each item according to a sequence of sequentially verifying the user certificate, the user signature, and the message type. In actual application, the preset sequence may alternatively be another sequence. This is not specifically limited in this embodiment of this application.

In addition, the status information may further include at least one of the following information: the message type, position information of the user equipment, and detection time. The position information of the user equipment may be geographic information, for example, the geographic information may be latitude and longitude information. The detection time is time when the first device obtains the V2X information. The message type may be consistent with that included in the V2X information, and details are not described herein in this embodiment of this application again.

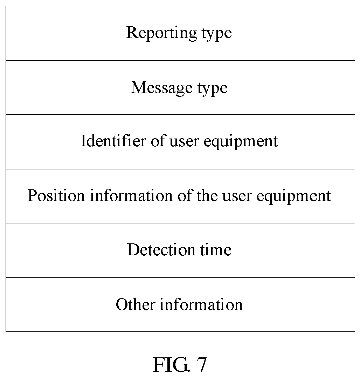

The status information may further include other information, for example, the other information may be speed and a driving direction of a vehicle. When the status information includes all of the above information, a structure of the status information may be shown in FIG. 7. A sequence of information items shown in FIG. 7 is merely an example, and does not limit the structure of the status information in this embodiment of this application.

Step 203: If the verification on the V2X information fails, the first device sends the status information to a second device, where the status information is used by the second device to monitor the user equipment.

The second device may be a server. When the first device determines that the verification on the V2X information of the user equipment fails, the first device may send the status information including the identifier of the user equipment to the second device, so that the second device monitors the user equipment based on the status information.

Step 204: The second device receives the status information sent by the first device, where the status information is used to indicate the result of the verification on the V2X information performed by the first device.

Step 205: The second device monitors the user equipment based on the status information.

When the second device receives the status information sent by the first device, the second device may monitor the user equipment based on the status information, to prevent a malicious user, a hacked zombie user, or the like from sending malicious information by using the user equipment, and resolve a traffic safety problem caused by sending malicious V2X information, thereby ensuring a normal traffic order and improving traffic safety.

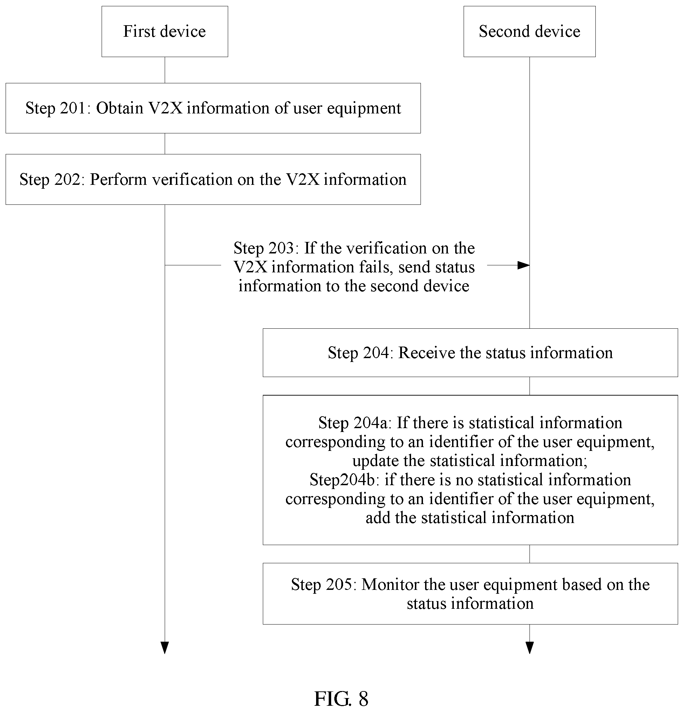

Further, referring to FIG. 8, when the status information includes the reporting type, after step 204 and before step 205, the method may further include: step 204a or step 204b.

Step 204a: If there is statistical information corresponding to the identifier of the user equipment, the second device updates, based on the status information, the statistical information corresponding to the identifier of the user equipment.

The statistical information is information obtained after the second device performs statistical analysis on the status information of the user equipment reported by the first device. The second device may perform statistical analysis on the status information of the user equipment received in specified duration, or the status information of the user equipment received in a specified area, and the like. The statistical information may include a quantity and frequency of reporting the user equipment, and statistic about information included in the status information performed the second device. For example, the statistical information may further include the reporting type, the detection time, and the position information of the user equipment. The statistical information corresponding to the identifier of the user equipment means that the statistical information is the statistical information of the user equipment indicated by the identifier of the user equipment.

For example, the statistical information in the second device may be as shown in Table 1. In Table 1, an example in which the statistical information of each user equipment includes a quantity of times of reporting the user equipment, detection time, and position information (detection time: position information) corresponding to each detection time within specified duration ΔT is described. If the identifier of the user equipment is ID1, the detection time is T13, and the position information of the user equipment is P13 in the status information received by the second device, the second device determines, according to Table 1, that there is statistical information corresponding to the ID1, so as to update, based on the status information, the statistical information corresponding to the ID1, and obtain statistical information shown in Table 2.

**Table 1**

| Identifier of user equipment | Statistical information | |
|---|---|---|
| | A quantity of reporting times (ΔT) | Detection time: position information |
| ID1 | 2 | T11: P11, T12: P12 |
| ID2 | 5 | T21: P21, T22: P22, T23: P23, T24: P24, T25: P25 |
| ... | ... | ... |

**Table 2**

| Identifier of user equipment | Statistical information | |
|---|---|---|
| | A quantity of reporting times (ΔT) | Detection time: position information |
| ID1 | 3 | T11: P11, T12: P12, T13: P13 |
| ID2 | 5 | T21: P21, T22: P22, T23: P23, T24: P24, T25: P25 |
| ... | ... | ... |

Step 204b: If there is no statistical information corresponding to the identifier of the user equipment, the second device adds, based on the status information, the statistical information corresponding to the identifier of the user equipment.

If there is no statistical information corresponding to the identifier of the user equipment, it indicates that the user equipment is reported the first time, so that the second device can add, based on the status information, the statistical information corresponding to the identifier of the user equipment. For example, the statistical information is shown in Table 1. If the identifier of the user equipment is ID3, the detection time is T31, and the position information of the user equipment is P31 in the status information received by the second device, the second device determines, according to Table 1, that there is no statistical information corresponding to the ID3, so as to add, based on the status information, the statistical information corresponding to the ID1, and obtain the statistical information shown in Table 3.

**Table 3**

| Identifier of user equipment | Statistical information | |
|---|---|---|
| | A quantity of reporting times (ΔT) | Detection time: position information |
| ID1 | 2 | T11: P11, T12: P12 |
| ID2 | 5 | T21: P21, T22: P22, T23: P23, T24: P24, T25: P25 |
| ID3 | 1 | T31: P31 |
| ... | ... | ... |

It should be noted that the statistical information corresponding to the identifier of the user equipment in the second device shown in Table 1, Table 2, and Table 3 is merely an example. Table 1, Table 2, and Table 3 do not limit this embodiment of this application.

Further, after the second device performs statistical analysis on the status information according to step 204a or 204b, that the second device monitors the user equipment based on the status information in step 205 is specifically: if the reporting type in the status information is the certificate error or the signature error, the second device sends alarm information to the user equipment; or if the reporting type in the status information is the emergency and special information, the second device determines whether the statistical information corresponding to the identifier of the user equipment meets a preset alarm condition. If the preset alarm condition is met, the second device sends the alarm information to the user equipment.

The preset alarm condition can be preset. For example, the preset alarm condition may be one of the following: a quantity of times of reporting the user equipment within specified duration meets a first preset threshold, or a quantity of times of reporting the user equipment in a specified area meets a second preset threshold.

It should be noted that the specified duration and the specified area may be preset. For example, the specified duration may be a unit time, and the specified area may be an area with a specified size. This is not specifically limited in this embodiment of this application. The first preset threshold and the second preset threshold may also be preset. This is not limited in this embodiment of this application, either.

During actual application, after the second device sends the alarm information to the user equipment, if the second device still receives the status information of the user equipment sent by the first device, the second device may predict a behavior of the user equipment based on the position information of the user equipment and other information such as speed and a driving direction of a vehicle in the status information. The second device performs onsite inspection based on a prediction result to prevent a malicious user or a hacked zombie user from sending malicious information by using the user equipment.

In this embodiment of this application, the first device obtains the V2X information of the user equipment, performs the verification on the V2X information, and sends the status information to the second device if the verification on the V2X information fails, so that the second device monitors the user equipment based on the status information, to prevent the malicious user, the hacked zombie user, or the like from sending the malicious information by using the user equipment, and resolve the traffic safety problem caused by sending malicious V2X information, thereby ensuring the normal traffic order and improving the traffic safety.

The foregoing mainly describes solutions provided in the embodiments of this application from a perspective of interaction between network elements. It may be understood that, to implement the foregoing functions, all network elements, for example, the first device and the second device, include a corresponding hardware structure and/or software module for performing each function. A person of ordinary skill in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the first device and the second device may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

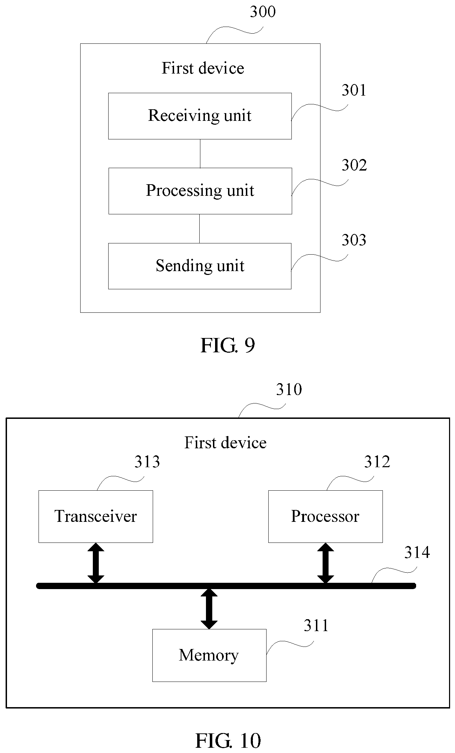

When function modules are divided based on corresponding functions, FIG. 9 is a possible schematic structural diagram of the first device in the foregoing embodiments. A first device 300 includes a receiving unit 301, a processing unit 302, and a sending unit 303. The receiving unit 301 is configured to perform step 201 in FIG. 6 or FIG. 8, the processing unit 302 is configured to perform step 202 in FIG. 6 or FIG. 8, and the sending unit 303 is configured to execute step 203 in FIG. 6 or FIG. 8. All related content of the steps in the foregoing method embodiments may be cited in function descriptions of corresponding function modules, and details are not described herein again.

In hardware implementation, the processing unit 302 may be a processor, the receiving unit 301 may be a receiver, the sending unit 303 may be a transmitter, and the receiver and the transmitter may constitute a transceiver.

FIG. 10 is a possible schematic logical structure diagram of a first device 310 in the foregoing embodiments according to an embodiment of this application. The first device 310 includes a processor 312, a transceiver 313, a memory 311, and a bus 314. The processor 312, the transceiver 313, and the memory 311 are connected to each other by using the bus 314. In this embodiment of this application, the processor 312 is configured to control and manage actions of the first device 310. For example, the processor 312 is configured to perform step 202 in FIG. 6 or FIG. 8, and/or other processes of technologies described in this application. The transceiver 313 is configured to support the first device 310 in communicating with the user equipment, the second device, and the like. The memory 311 is configured to store program code and data of the first device 310.

The processor 312 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 314 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is used to represent the bus in FIG. 10, but this does not mean that there is only one bus or only one type of bus.

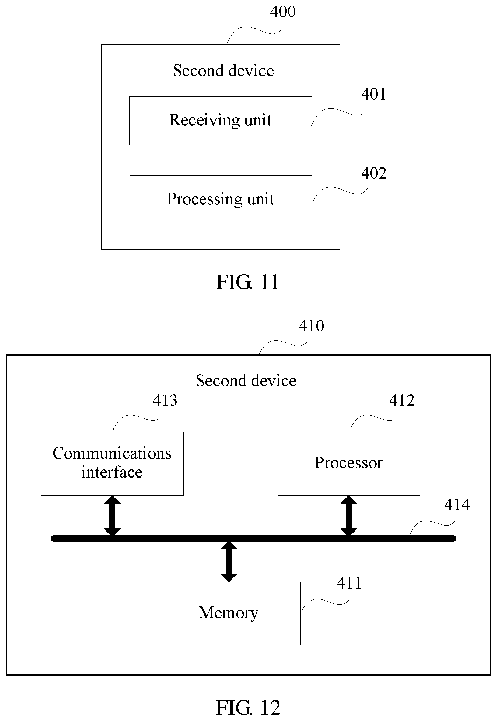

When function modules are obtained through division based on corresponding functions, FIG. 11 is a possible schematic structural diagram of the second device in the foregoing embodiments. A second device 400 includes a receiving unit 401 and a processing unit 402. The receiving unit 401 is configured to perform step 204 in FIG. 6 or FIG. 8, and the processing unit 402 is configured to perform step 205 in FIG. 6 or FIG. 8. Further, the processing unit 402 is further configured to perform step 204a or step 204b in FIG. 8. All related content of the steps in the foregoing method embodiments may be cited in function descriptions of corresponding function modules, and details are not described herein again.

In hardware implementation, the processing unit 402 may be a processor, and the receiving unit 401 may be a receiver. The receiver and the transmitter may form a communications interface.

FIG. 12 is a possible schematic logical structure diagram of a second device 410 involved in the foregoing embodiment according to an embodiment of this application. The second device 410 includes a processor 412, a communications interface 413, a memory 411, and a bus 414. The processor 412, the communications interface 413, and the memory 411 are connected to each other by using the bus 414. In this embodiment of this application, the processor 412 is configured to control and manage actions of the second device 410. For example, the processor 412 is configured to perform step 204 and step 204a or step 204b in FIG. 8, and/or other processes of technologies described in this application. The communications interface 413 is configured to support the second device 410 to communicate with the user equipment, the base station, and the like. The memory 411 is configured to store program code and data of the second device 410.

The processor 412 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 414 may be a PCI bus, an EISA bus, or the like. The bus may be classified into an address bus, a data bus, a control bus, and the like. For ease of representation, only one thick line is used to represent the bus in FIG. 12, but this does not mean that there is only one bus or only one type of bus.

In another embodiment of this application, a computer readable storage medium stored a computer executable instruction is provided. When at least one processor of the device executes the computer executable instruction, the device executes the step of the first device in an information processing method provided in FIG. 6 or FIG. 8, or the step of the second device in the information processing method provided in FIG. 6 or FIG. 8.

In another embodiment of this application, a computer program product is also provided. The computer program product includes a computer executable instruction, and the computer executable instruction is stored in a computer readable storage medium. At least one processor of a device may read the computer executable instruction from the computer readable storage medium, and the at least one processor executes the computer executable instruction, so that the device performs the steps of the first device in the information processing method provided in FIG. 6 or FIG. 8, or performs the steps of the second device in the information processing method provided in FIG. 6 or FIG. 8.

In another embodiment of this application, a system is further provided. The system includes user equipment, a first device, and a second device. The first device may be a base station and/or a roadside unit. The first device is the first device provided in FIG. 9 or FIG. 10, used to perform the step of the first device in the information processing method provided in FIG. 6 or FIG. 8; and/or the second device is the second device provided in FIG. 11 or FIG. 12, used to perform the step of the second device in the information processing method provided in FIG. 6 or FIG. 8.

In the embodiments of this application, the first device obtains the V2X information of the user equipment, performs the verification on the V2X information, and the first device sends the status information to the second device if the verification on the V2X information fails, so that the second device monitors the user equipment based on the status information, to prevent the malicious user, the hacked zombie user, or the like from sending the malicious information by using the user equipment, and resolve the traffic safety problem caused by sending malicious V2X information, thereby ensuring the normal traffic order and improving the traffic safety.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information processing method, wherein the method comprises:
obtaining, by a first device, V2X information of user equipment; and
performing, by the first device, verification on the V2X information, and if the verification on the V2X information fails, sending, by the first device, status information to a second device, wherein the status information is used to indicate a result of the verification on the V2X information performed by the first device.

2. The method according to claim 1, wherein the V2X information comprises at least one of the following information: an identifier of the user equipment, a user certificate, a user signature, and a message type.

3. The method according to claim 2, wherein the performing, by the first device, verification on the V2X information comprises:
if the V2X information comprises the user certificate, performing, by the first device, verification on the user certificate, and if the user certificate is invalid, determining that the verification on the V2X information fails; and/or
if the V2X information comprises the user signature, performing, by the first device, verification on the user signature, and if the user signature is incorrect, determining that the verification on the V2X information fails; and/or
if the V2X information comprises the message type, performing, by the first device, verification on the message type, and if the message type belongs to a preset message type, determining that the verification on the V2X information fails.

4. The method according to claim 3, wherein the status information further comprises a reporting type, the reporting type belongs to a preset reporting type, the preset reporting type comprises a certificate error, a signature error, and emergency and special information, and before the sending, by the first device, status information to a second device, the method further comprises:
if the user certificate is invalid, determining, by the first device, the reporting type in the status information as the certificate error;
if the user signature is incorrect, determining, by the first device, the reporting type in the status information as the signature error; or
if the message type is the preset message type, determining, by the first device, the reporting type in the status information as the emergency and special information.

5. The method according to any one of claims 1 to 4, wherein the status information further comprises at least one of the following information: the message type, position information of the user equipment, and detection time.

6. An information processing method, wherein the method comprises:
receiving, by a second device, status information sent by a first device, wherein the status information is used to indicate a result of verification on V2X information of user equipment performed by the first device; and
monitoring, by the second device, the user equipment based on the status information.

7. The method according to claim 6, wherein the status information further comprises at least one of the following information: an identifier of the user equipment, a reporting type, a message type, position information of the user equipment, and detection time; and
the reporting type belongs to a preset reporting type, and the preset reporting type comprises a certificate error, a signature error, and emergency and special information.

8. The method according to claim 7, wherein if the status information comprises the reporting type, after the receiving, by a second device, status information sent by a first device, the method further comprises:
if there is statistical information corresponding to the identifier of the user equipment, updating, by the second device based on the status information, the statistical information corresponding to the identifier of the user equipment; or
if there is no statistical information corresponding to the identifier of the user equipment, adding, by the second device based on the status information, the statistical information corresponding to the identifier of the user equipment.

9. The method according to claim 8, wherein the monitoring, by the second device, the user equipment based on the status information comprises:
if the reporting type is the certificate error or the signature error, sending, by the second device, alarm information to the user equipment; or
if the reporting type is the emergency and special information, determining, by the second device, whether the statistical information corresponding to the identifier of the user equipment meets a preset alarm condition, and sending alarm information to the user equipment if the preset alarm condition is met.

10. The method according to claim 9, wherein the preset alarm condition is one of the following: a quantity of times of reporting the user equipment within specified duration meets a first preset threshold, or a quantity of times of reporting the user equipment in a specified area meets a second preset threshold.

11. A device, wherein the device is a first device, and comprises:
a receiving unit, configured to obtain V2X information of user equipment;
a processing unit, configured to perform verification on the V2X information; and
a sending unit, configured to: if the verification on the V2X information fails, send status information to a second device, wherein the status information is used to indicate a result of the verification on the V2X information performed by the first device.

12. The device according to claim 11, wherein the V2X information comprises at least one of the following information: an identifier of the user equipment, a user certificate, a user signature, and a message type.

13. The device according to claim 12, wherein the processing unit is specifically configured to:
if the V2X information comprises the user certificate, perform the verification on the user certificate, and if the user certificate is invalid, determine that the verification on the V2X information fails; and/or
if the V2X information comprises the user signature, perform the verification on the user signature, and if the user signature is incorrect, determine that the verification on the V2X information fails; and/or
if the V2X information comprises the message type, perform the verification on the message type, and if the message type belongs to a preset message type, determine that the verification on the V2X information fails.

14. The device according to claim 13, wherein the status information further comprises a reporting type, the reporting type belongs to a preset reporting type, the preset reporting type comprises a certificate error, a signature error, and emergency and special information, and the processing unit is further configured to:
if the user certificate is invalid, determine the reporting type in the status information as the certificate error;
if the user signature is incorrect, determine the reporting type in the status information as the signature error; or
if the message type is the preset message type, determine the reporting type in the status information as the emergency and special information.

15. The device according to any one of claims 11 to 14, wherein the status information further comprises at least one of the following information: the message type, position information of the user equipment, and detection time.

16. A device, wherein the device is a second device, and comprises:
a receiving unit, configured to receive status information sent by a first device, wherein the status information is used to indicate a result of verification on V2X information of user equipment performed by the first device; and
a processing unit, configured to monitor the user equipment based on the status information.

17. The device according to claim 16, wherein the status information further comprises at least one of the following information: an identifier of the user equipment, a reporting type, a message type, position information of the user equipment, and detection time; and
the reporting type belongs to a preset reporting type, and the preset reporting type comprises a certificate error, a signature error, and emergency and special information.

18. The device according to claim 17, wherein if the status information comprises the reporting type, the processing unit is further configured to:
if there is statistical information corresponding to the identifier of the user equipment, update, based on the status information, the statistical information corresponding to the identifier of the user equipment; or
if there is no statistical information corresponding to the identifier of the user equipment, add, based on the status information, the statistical information corresponding to the identifier of the user equipment.

19. The device according to claim 18, wherein the processing unit is specifically configured to:
if the reporting type is the certificate error or the signature error, send alarm information to the user equipment; or
if the reporting type is the emergency and special information, determine whether the statistical information corresponding to the identifier of the user equipment meets a preset alarm condition, and send alarm information to the user equipment if the preset alarm condition is met.

20. The device according to claim 19, wherein the preset alarm condition is one of the following: a quantity of times of reporting the user equipment within specified duration meets a first preset threshold, or a quantity of times of reporting the user equipment in a specified area meets a second preset threshold.

21. A device, wherein the device is a first device and comprises a processor and a memory, the memory stores code and data, and the processor runs the code in the memory, so that the device performs the information processing method according to any one of claims 1 to 5.

22. A device, wherein the device is a second device and comprises a processor and a memory, the memory stores code and data, and the processor runs the code in the memory, so that the device performs the information processing method according to any one of claims 6 to 10.

23. A system, wherein the system comprises user equipment, a first device, and a second device, the first device is a base station and/or a roadside unit, the first device is the device according to any one of claims 11 to 15, or the device according to claim 21; and/or the second device is the device according to any one of claims 16 to 20, or the device according to claim 22.
